# EUROPÄISCHE PATENTANMELDUNG

(11) **EP 2 088 079 A2**
(43) Veröffentlichungstag der Anmeldung: **12.08.2009**
(21) Anmeldenummer: 09152077.5
(22) Anmeldetag: 04.02.2009
(51) Int. Cl.: B64F 5/00, E04G 21/32

(54) **Absturzsicherung**

(30) Priorität: 11.02.2008 DE 102008008577
(71) Anmelder: Lufthansa Engineering and Operational Services GmbH, 60546 Frankfurt (DE)
(72) Erfinder: Frauendorf, Heiko, 55130, Mainz (DE)
(74) Vertreter: WSL Patentanwälte

(57) **Zusammenfassung**

Die vorliegende Erfindung betrifft eine Vorrichtung zur Sicherung von Personen bei Wartungsarbeiten auf Flugzeugtragflächen mit einem oberhalb der Tragfläche (1) gespannten Seil (2). Um eine entsprechende Vorrichtung zu schaffen bzw. in der Weise auszugestalten, dass sie einerseits wesentlich einfacher und preiswerter wird als die bekannte Vakuumhalteeinrichtung, wobei andererseits aber auch unter keinen Umständen die von der Vorrichtung beanspruchten Flugzeugstrukturen über die zulässigen Grenzwerte hinaus belastet werden, wird erfindungsgemäß vorgeschlagen, dass das Seil (2) zwischen einem definierten ersten Anschlagpunkt (3) am Rumpf (4) oberhalb der Tragfläche (1) und einem zweiten definierten Anschlagpunkt (5) an der Oberseite der Tragfläche (1) in der Nähe der Tragflächenspitze gespannt ist, wobei zwischen den ersten und zweiten Anschlagpunkten (3, 5) eine Dämpfungseinrichtung (7) vorgesehen ist. welche bei in dem Seil auftretenden Zugkräften eine definierte Seilverlängerung bewirkt.

## Beschreibung

Die vorliegende Erfindung betrifft eine Vorrichtung zur Sicherung von Personen bei Wartungsarbeiten auf Flugzeugtragflächen, mit einem oberhalb der Tragfläche gespannten Seil.

Flugzeugtragflächen müssen regelmäßig gewartet und zum Erhalt ihrer aerodynamischen Eigenschaften regelmäßig in relativ kurzen Zeitabständen gründlich gereinigt werden. Die Tragflächen von Passagierflugzeugen sind dabei üblicherweise so ausgelegt, dass sie bestimmte Zonen aufweisen, die von dem Wartungspersonal betreten werden dürfen, während andere Bereiche nach Möglichkeit nicht betreten werden sollen, um nicht die Tragfläche oder darunter liegende Strukturen zu beschädigen.

Da moderne Passagierflugzeuge in der Regel relativ groß sind, befinden sich deren Tragflächen typischerweise in einem Abstand zum Erdboden, der drei Meter und mehr betragen kann. Jegliche Reinigungs- und sonstige Wartungsarbeiten auf den Tragflächen dürfen daher entsprechend den einschlägigen Sicherheitsvorschriften nur mit einer ausreichenden Absicherung der auf den Tragflächen arbeitenden Personen durch eine entsprechende Vorrichtung zur Absturzsicherung durchgeführt werden.

Die Tragflächen moderner Passagierjets haben dabei zum Teil eine Länge von dreißig Metern und mehr, wobei die Vorrichtung zur Sicherung der Personen über diese gesamte Länge hinweg gleichermaßen funktionsfähig sein muss.

Es ist auch bereits eine entsprechende Vorrichtung zur Sicherung von Personen bei Wartungsarbeiten auf Flugzeugtragflächen bekannt, welche mehrere und typischerweise bis zu sechs Vakuumhalteeinrichtungen verwendet, die in etwa regelmäßigen Abständen auf die Oberseite der Flugzeugtragfläche aufgesetzt werden und durch Erzeugung von Unterdruck an ihrer Unterseite auf der Oberfläche der Tragfläche haften. Es versteht sich, dass derartige Vakuumhalteeinrichtungen zur Erzeugung der erforderlichen Haltekraft, die ausreichen muss, um eine über eine Sicherungsleine gesicherte Person, die über den Rand der Tragfläche abstürzt, aufzufangen, eine relativ große Ansaugfläche benötigen, um sicher an der Tragfläche zu haften und um auch die Tragflächenstruktur nicht nur punktuell zu belasten. Demzufolge haben die einzelnen Vakuumhalteeinrichtungen nicht nur eine entsprechend große Fläche, die nach dem Aufsetzen der Halteeinrichtung für die Wartungsarbeiten nicht mehr zugänglich ist, sondern es muss auch eine größere Zahl entsprechender Vakuumhalteeinrichtungen entlang der Oberfläche der Tragfläche angeordnet werden, wobei ein Sicherungsseil sämtliche Vakuumhalteeinrichtungen miteinander verbindet und Sicherungsleinen jeder einzelnen Person ihrerseits an dem Seil gesichert und geführt sind.

Die Besetzung gewisser Flächen durch die Vakuumhalteeinrichtungen erfordert nicht nur, dass diese Vakuumhalteeinrichtungen während der Durchführung der Wartungsarbeiten und insbesondere während der Durchführung von Reinigungsarbeiten zwischenzeitlich gelöst und versetzt werden müssen, damit auch die zunächst von den Vakuumhalteeinrichtungen besetzten Flächen zugänglich werden, sondern diese Vakuumhalteeinrichtungen sind darüber hinaus auch relativ aufwändig und teuer und sie benötigen eine permanente Energiezufuhr.

Andererseits weisen zwar sowohl Tragflächen in der Nähe ihrer Enden als auch die Rümpfe von Flugzeugen oberhalb der jeweiligen Tragfläche zumindest bei der Airbusfamilie Verankerungs-. bzw. Anschlagspunkte auf, an denen ein Sicherungsseil befestigt werden könnte.

Es hat sich allerdings herausgestellt, dass beim Spannen eines Seils zwischen dem Anschlagpunkt am Rumpf eines Flugzeuges und einem weiteren Anschlagpunkt in der Nähe der Tragflächenspitze die im Falle des Absturzes einer daran gesicherten Person auftretenden Kräfte größer sind als die Grenzbelastungen, für welche derartige Anschlagpunkte ausgelegt sind. Es ist deshalb nicht möglich, ein zwischen derartigen Anschlagendpunkten gespanntes Seil ohne weiteres als Vorrichtung zur Sicherung von Personen bei Wartungsarbeiten zu verwenden.

Gegenüber diesem Stand der Technik liegt der vorliegenden Erfindung die Aufgabe zu Grunde, eine entsprechende Vorrichtung zu schaffen bzw. in der Weise auszugestalten, dass sie einerseits wesentlich einfacher und preiswerter wird als die bekannte Vakuumhalteeinrichtung, wobei andererseits aber auch unter keinen Umständen die von der Vorrichtung beanspruchten Flugzeugstrukturen über die zulässigen Grenzwerte hinaus belastet werden.

Diese Aufgabe wird dadurch gelöst, dass das Seil zwischen einem definierten ersten Anschlagpunkt am Rumpf oberhalb der Tragfläche und einem zweiten definierten Anschlagpunkt an der Oberseite der Tragfläche in der Nähe der Tragflächenspitze gespannt ist, wobei zwischen diesen beiden Anschlagpunkten eine Dämpfungseinrichtung vorgesehen ist, welche bei in dem Seil auftretenden Zugkräften eine definierte Seilverlängerung bewirkt.

Es hat sich herausgestellt, dass es mit einer solchen Dämpfungseinrichtung möglich ist, die in dem Seil auftretenden Kräfte, die von einer an dem Seil gesicherten Person, welche über eine zusätzliche persönliche Schutzausrüstung (auch kurz als PSA bezeichnet) möglicherweise ausgeübt werden, wenn diese Person über eine Kante der Tragfläche abstürzt, durch die Dämpfungseinrichtung soweit begrenzt werden können, dass die Belastungsgrenzwerte in den Anschlagpunkten nicht überschritten werden. Dabei muß zwar die Dämpfungseinrichtung ein gewisses Maß an effektiver Seilverlängerung bewirken, welches aber in der Praxis ohne weiteres so begrenzt werden kann, dass die Funktion des Seiles als Absturzsicherung nicht beeinträchtigt wird und dennoch die Grenzbelastungswerte der Anschlagpunkte nicht überschritten werden. Die PSA umfaßt ihrerseits i.a. eine Sicherungsleine, welche wiederum mit dem Seil verbunden ist.

Gegebenenfalls wird bei sehr langen Tragflächen ein zusätzlicher Ankerpunkt etwa in der Mitte zwischen den Anschlagpunkten (Endpunkten) der Sicherungsleine gesetzt, wobei ein solcher Ankerpunkt eine herkömmliche Vakuumhalteeinrichtung sein kann.

Zweckmäßigerweise ist die Dämpfungseinrichtung in das Seil integriert, indem ein Seil mit einem bestimmten Kraft-Dehnungsverhalten ausgewählt wird, das in der Weise ausgewählt wird, daß eine von einer Tragfläche abstürzende Person (bzw. ein abstürzendes Gewicht von z. B. 100 Kg) beim Abfangen eine Kraft in dem Seil hervorruft, die in der Spitze einen Wert von z. B. 4 kN nicht überschreitet.

Dieser Vorgang läuft in der Regel dynamisch ab, das heißt im Falle des Absturzes einer Person wird das Seil, an welchem die abstürzende Person über eine zusätzliche Sicherungsleine gesichert ist, seitlich ausgelenkt und es tritt eine Kraftspitze auf, wenn sich nach einem bestimmten Fallweg der Person die Sicherungsleine spannt, wobei das Seil dabei senkrecht zu seiner Spannrichtung zwischen den Anschlagpunkten ausgelenkt wird und dadurch die Spannung in dem Seil sich drastisch erhöht. Mit zunehmender Kraft verlängert sich jedoch das Seil in einem solchen Umfang, daß die eben angesprochenen Kraftgrenzwerte nicht überschritten werden. Alternativ kann man auch ein weniger dehnbares ("hartes") Seil in Kombination mit einer separaten Dämpfungsvorrichtung vorsehen, die in Abhängigkeit von den auftretenden Kraftgrenzwerten in begrenztem Umfang das Seil frei gibt, so dass es sich verlängern und dadurch die in dem Seil und den Anschlagpunkten ansonsten auftretende Kraftspitze abdämpfen kann. Dies hat gleichzeitig den Vorteil, dass auch die Kraft in der sich ruckartig spannenden Sicherungsleine, an welcher die gesicherte Person hängt, gedämpft wird. Erfindungsgemäß ist vorgesehen, daß die Seildehnung pro kN bei etwa 1 % liegt. Andererseits sollten aber auch gewisse Maximalwerte der Dehnungsfähigkeit nicht überschritten werden, weil ansonsten das Seil so sehr nachgeben könnte, daß eine abstürzende Person auf den Boden aufschlagen könnte. Gemäß einer Ausführungsform sollte daher der Wert der Dehnung 4% pro kN nicht übersteigen. Bevorzugte Werte der Lastdehnung (im linearen Bereich) liegen zwischen 0,5 und 2 %/kN, insbesondere zwischen 0,8 und 1,2 %/kN

Im Fall einer separaten Dämpfungseinrichtung gibt diese eine zusätzliche Seillänge zweckmäßigerweise nur bei Auftreten eines oberen Grenzwertes der Zugspannung frei, wobei dieser Grenzwert höchstens 6 kN beträgt. Gemäß einer Ausführungsform der Erfindung wird dieser Grenzwert nicht unter 4 kN eingestellt. Weiterhin ist gemäß einer Ausführungsform der vorliegenden Erfindung die Dämpfungseinrichtung derart ausgelegt, dass sie die zusätzliche Seilfreigabe stoppt, sobald die Zugspannung in dem Seil einen unteren Grenzwert unterschreitet. Gemäß einer Variante der Erfindung liegt dieser untere Grenzwert bei etwa 4 kN oder etwas darüber.

Des weiteren gibt es eine Ausführungsform der Erfindung, bei welcher außerdem zwischen den Anschlagspunkten eine Seilspannvorrichtung vorgesehen ist, welche in dem Seil eine (eventuell variabel einstellbare) Vorspannung einstellt. Gemäß einer Variante der Erfindung ist die Seilspannvorrichtung derart ausgelegt, dass sie die Seilspannung auf einen Wert zwischen 0,3 und 1 kN, zum Beispiel auf etwa 0,5 kN einstellt. Diese Seilspannvorrichtung sorgt dafür, daß das Seil jederzeit vorgespannt ist und zu keinem Zeitpunkt schlaff durchhängt. Letzteres würde für eine abstürzende Person einen zusätzlichen Fallweg bedeuten, bevor sich das Seil strafft und überhaupt Kraft auf die Dämpfungseinrichtung ausübt, wobei dann die erst spät einsetzende Dämpfungseinrichtung noch zusätzlich Seillänge freigibt, so daß die für die Person verbleibende Distanz zum Boden womöglich nicht mehr ausreichen würde, um einen Aufprall zu vermeiden, zumal durch die zusätzliche Fallstrecke dann auch noch mehr kinetische Energie durch die Dämpfungseinrichtung aufzufangen wäre. Eine Seilvorspannung ist insbesondere auch dann besonders hilfreich, wenn das Seil aufgrund seines Kraft-Dehnungsverhaltens eine integrierte Dämpfungseinrichtung umfaßt, da de Anfangsdehnung eines dehnbaren Seiles oftmals überproportional groß (z. B. über 4% pro kN) ist und diese zusätzliche Dehnung durch die Vorspanneinrichtung beseitigt wird.

Selbstverständlich ist es auch möglich, die Dämpfungseinrichtung und die Seilspannvorrichtung in einer einzigen Einrichtung zu integrieren, das heißt Seilspannvorrichtung und Dämpfungseinrichtung sind miteinander identisch bzw. als eine Einheit miteinander kombiniert.

In Falle einer extrem langen Tragfläche ist von mehr als 20 m, so daß auch die Seillänge zwischen den Anschlagspunkten etwa zwanzig Meter oder mehr erreicht, kann ein zusätzlicher Vakuumanker etwa im mittleren Bereich zwischen den Anschlagendpunkten des gespannten Seils vorgesehen sein, welcher das gespannte Seil gegen übermäßige seitliche Auslenkungen sichert. Anderenfalls besteht bei sehr großen Seillängen die Gefahr, dass trotz einer erheblichen seitlichen Auslenkung etwa in der Mitte des Seiles die auftretende Spannkraft in dem Seil noch nicht so groß wird, das die Dämpfungseinrichtung auslösen würde oder aber die Seildehnung bei moderater Spannkraft eine zu große seitliche Auslenkung zulässt, was dann zu einem entsprechend tieferen Fall einer abstürzenden Person führen könnte, die entweder dadurch verletzt würde. Eine allzu große frei Länge des Sicherungsseiles könnte zu einem relativ späten Auslösen der Dämpfungseinrichtung führen, die dann zur Dämpfung der Kraftspitze womöglich so viel zusätzliche Seillänge freigeben bzw. eine entsprechend große Seildehnung bewirken würde, dass ein Aufschlagen der abstürzenden Person auf dem Boden nicht mehr sicher auszuschließen wäre.

Zwar bringt eine zusätzliche Vakuumhalteeinrichtung den erwähnten Nachteil mit sich, daß diese einen Teil der zu wartenden bzw. reinigenden Fläche abdeckt, jedoch handelt es sich dabei im Gegensatz zum Stand der Technik nur um eine einzige Vakuumhalteeinrichtung, so daß der Aufwand, diese einmal zu versetzen, vergleichsweise gering ist und auch die von den Vakuumhalteeinrichtungen ansonsten verursachten Kosten sind dann immer noch drastisch reduziert, wenn beispielsweise nur eine einzige anstatt 6 Vakuumhalteeinrichtungen benötigt wird und diese auch nur bei besonders großen Tragflächen einzusetzen wäre,

An den Anschlagpunkten ist gemäß einer Ausführungsform der Erfindung je ein dreiviertel Zoll - Gewinde vorgesehen, wobei diese Anschlagpunkte mit einem hierzu passenden Gewindebolzen versehen sind, der eine Seilöse aufweist, in die entweder eine Seilschlaufe eingelegt werden kann oder an welcher auch ein Karabinerhaken, der mit einem Ende des Seils fest verbunden ist, eingehängt werden könnte.

Derartige Anschlagpunkte sind, wenn sie mit tragenden Strukturelementen des Flugzeugs bzw. der Tragfläche fest verbunden sind, ausreichend, um die erforderlichen Zugkräfte aufzunehmen, die bei Einsatz der erfindungsgemäßen Dämpfungseinrichtung maximal auftreten können.

Des weiteren ist gemäß einer Ausführungsform der Erfindung mindestens eine das Seil umgreifende Führungshülse vorgesehen, wobei diese Führungshülse für die Verbindung einer Sicherungsleine mit dem Seil ausgelegt ist. Üblicherweise bleiben derartige Führungshülse immer an dem Seil angeordnet und sie weisen z. B. eine Öse oder dergleichen auf, in welche ein Wartungstechniker das Ende seiner persönlichen Sicherungsleine z. B. mit Hilfe eines Karabinerhakens befestigen kann, wobei die Sicherungsleine wiederum mit einem Haltegeschirr verbunden ist, das den Körper der Person sicher umfaßt.

Zweckmäßigerweise sind mindestens zwei derartige Führungshülsen vorgesehen, so daß mehrere Personen gleichzeitig auf der Tragfläche arbeiten können und dabei an dem Seil gesichert sind. Sofern ein entsprechender Vakuumhalter bzw. Vakuumanker beispielsweise in der Mitte zwischen den beiden Anschlagpunkten zusätzlich vorgesehen ist, sollte mindestens eine Führungshülse jeweils beiderseits des Vakuumankers vorgesehen sein, vorzugsweise sollten auf beiden Seiten des Vakuumankers mindestens je zwei Führungshülsen vorgesehen sein. Dies ist insbesondere dann zweckmäßig, wenn die Führungshülsen und der Vakuumanker so ausgelegt sind, daß die Führungshülsen nicht über den Vakuumanker hinweg bzw. an diesem vorbei bewegt werden können.

Weiterhin ist gemäß einer Ausführungsform der Erfindung vorgesehen, daß die mindestens eine Führungshülse eine Sicherheitsklemmvorrichtung aufweist, welche auch bei plötzlichen Längsverschiebungen der Führungshülse entlang des Seils ein Verklemmen der Führungshülse an dem Seil bewirkt. Derartige Klemmvorrichtungen können z. B. durch Trägheitssensoren oder Hebelmechanismen ausgelöst werden, die nicht nur auf eine schnelle und plötzliche Bewegung der Führungshülse, sondern auch auf einen sehr kleinen Winkel zwischen dem Seil und der über die Führungshülse an dem Seil befestigten Sicherungsleine ansprechen.

Unter den Gewindebolzen an den Anschlagpunkten sind gemäß einer Ausführungsform der Erfindung großflächige Unterlegplatten vorgesehen, deren Farbe sich deutlich von der Farbe der Tragfläche und des Rumpfes im Bereich der Anschlagpunkte abhebt. Durch derartig großflächige und farblich auffällige Unterlegplatten soll sichergestellt werden, daß nach Abschluß der Wartungsarbeiten die entsprechenden Gewindebolzen, die in die am Flugzeug fixierten Anschlagpunkte (in Form entsprechend in Tragfläche oder Rumpf versenkter Hülsen mit Innengewinde) eingeschraubt sind, auch wieder entfernt werden, wobei die großflächigen Unterlegplatten das Vorhandensein der Gewindebolzen auch in großem Abstand sichtbar machen, während die Gewindebolzen allein womöglich übersehen werden könnten.

Gemäß einer Ausführungsform beträgt die Fläche der Unterlegplatten jeweils mindestens 100cm² und vorzugsweise jeweils mindestens 200cm². Die Unterlegplatten können in der Draufsicht kreisförmig oder kreissektorförmig, wahlweise aber auch dreieckig, quadratisch oder in anderer Weise polygonal ausgebildet sein. Vorzugsweise werden sie in der Signalfarbe Rot oder Orange hergestellt, wobei unter Umständen auch andersfarbige Unterlegplatten verwendet werden können, wenn die Farbe der Tragfläche oder des Rumpfes keinen ausreichenden Kontrast zu roten oder orangefarbenen Unterlegplatten bieten.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 eine Draufsicht auf eine relativ lange Tragfläche eines vierstrahligen Großraumflugzeuges (Airbus A 340) mit einem zwischen Anschlagendpunkten gespannten Seil und einem zusätzlichen Vakuumanker
Figur 2 eine Seitenansicht eines in die Hülse eines Anschlagpunktes 1 zu schraubenden Sicherungsbolzens,
Figur 3 eine gegenüber Figur 2 um 90° um seine Achse verdrehten Sicherungsbolzen,
Figur 4 eine Detailansicht des Bereiches B in Figur 2
Figur 5 eine elastische Unterlegscheibe zum Aufschieben auf den Gewindeabschnitt des Bolzens.
Figur 6a eine Draufsicht auf einen Sicherungsbolzen mit einer darunterliegenden Unterlegplatte
Figur 6b eine Schnittansicht des Bolzens und der Unterlegplatte nach Figur 6a entsprechend der Schnittlinie AA,
Figur 7a eine Draufsicht auf einen Sicherungsbolzen mit einer kreisförmigen Unterlegplatte und
Figur 7b einen Schnitt durch den Bolzen und die Unterlegplatte nach Figur 7a entsprechend der Linie A-A in Figur 7a

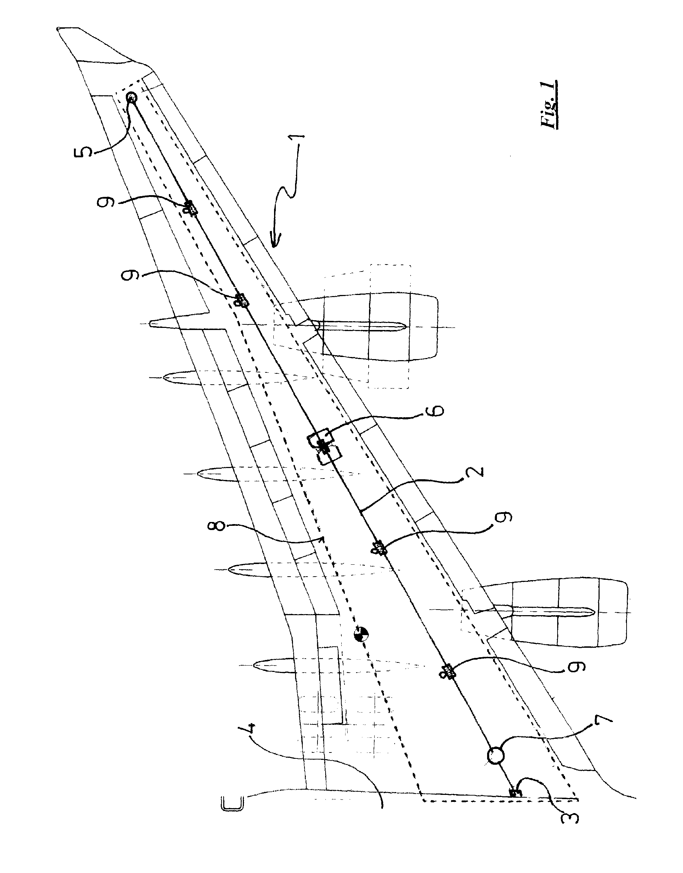

Man erkennt in Figur 1 in der Draufsicht die Tragfläche eines Großraumflugzeuges, wobei die Tragflächenform und weitere Details in diesem Fall der Tragfläche des Airbus A 340-300 entsprechen. Man erkennt im Abstand von den vorderen und hinteren Tragflächenrändern ein am Rumpf beginnendes und fast bis zu der Spitze der Tragfläche reichendes Feld, das durch eine gestrichelte Linie 8 umrissen ist, welche denjenigen Bereich umrahmt, der bei Wartungsarbeiten üblicherweise betreten werden darf, während außerhalb dieser gestrichelten Linie liegende Bereiche nach Möglichkeit nicht betreten werden sollten. Ein Sicherungsseil 2 ist zwischen einem ersten Anschlagpunkt 3 am Rumpf 4 des Flugzeuges und an einem weiteren Anschlagpunkt 5 in der Nähe der Spitze der Tragfläche 1 befestigt. In der Nähe des Anschlagpunktes 3 am Rumpf 4 ist in das Seil 2 die erfindungsgemäße Spanneinrichtung 7 integriert, während eine Dämpfungseinrichtung effektiv dadurch realisiert ist, daß das Seil 2 ein bestimmtes Kraft-Dehnungsverhalten zeigt und eine Dehnung zwischen 0,5 und 1,5 % pro kN Zugspannung aufweist. Diese Seilspannvorrichtung kann entweder eine mechanische Spannvorrichtung sein, die mit einer Feder arbeitet, eine elektromechanische Spannvorrichtung, die einen elektromagnetischen Wickelantrieb aufweist oder aber eine hydraulisch oder pneumatische Einrichtung, die ebenfalls einen entsprechenden Wickelantrieb aufweist. Die Spannvorrichtung könnte in diesen Fällen gleichzeitig auch als Dämpfungsvorrichtung verwendet werden, wobei auch andere Dämpfungseinrichtungen und Spannvorrichtungen sowie Kombinationen verschiedener Dämpfungs- und Spannvorrichtungen denkbar sind, die im Prinzip im Stand der Technik bekannt sind und in ihrer detaillierten Ausgestaltung nicht Gegenstand der vorliegenden Erfindung sind. In der dargestellten Ausführungsform wird davon ausgegangen, daß die Dämpfung durch die Dehnungsfähigkeit des Seiles 2 selbst bereitgestellt wird, wobei die Seilspannvorrichtung einstellbar sein kann oder auch einfach eine feste Vorspannung gewährleistet, so daß das Seil 2 zwischen den beiden Anschlagpunkten bzw. Anschlagendpunkten 3, 5 straff gespannt ist. Der Maximalwert dieser Vorspannung sollte typischerweise in der Größenordnung von 0,5 bis 2 kN liegen. Die Dämpfungs- bzw. Dehnungsfähigkeit des Seiles wird hingegen so gewählt, daß die im Falle eines Absturzes auftretenden Kräfte unterhalb der Grenzwerte liegen, für welche die Anschlagpunkte am Rumpf oder an der Tragfläche ausgelegt sind. Bei vielen entsprechenden Flugzeugtypen liegt man mit Werten unterhalb von 6 kN Zugspannung in einem sicheren Bereich unterhalb der maximal zulässigen Grenzwerte. Die Dehnungsfähigkeit des Seiles 2 wird dementsprechend ausgewählt. Gegebenenfalls kann man die auftretenden Zugspannungen und die erforderlichen Dämpfungseigenschaften der Seile oder einer separaten Dämpfungseinrichtung durch einfache Fallversuche mit einem Gewicht ermitteln, da diese Werte von der Gesamtlänge des Sicherungsseiles, der zwischen einem der Anschlagendpunkte und einer dazwischen befindlichen Verankerung frei gespannten Seillänge sowie der maximal abzusichernden Fallhöhe abhängen. In der Praxis hat sich ein mit 0,5 kN vorgespanntes Sicherungsseil mit einer Lastdehnung von 1 % pro kN bei einer etwa 30 m langen Tragfläche und einem entsprechend langen Sicherungsseil mit einem zusätzlichen Vakuumanker etwa in der Mitte zwischen den Anschlagendpunkten als geeignet erwiesen, um eine Person gegen einen Sturz aus etwa 3,5 m Höhe abzusichern, ohne daß die Grenzwerte der Zugbelastung an den Anschlagpunkten überschritten werden.

In dem dargestellten Ausführungsbeispiel erkennt man etwa in der Mitte zwischen den Anschlagendpunkten 3, 5 noch einen zusätzlichen Vakuumanker 6, der durch Erzeugung von Vakuum an seiner Unterseite an der Oberfläche der Tragfläche haftet und der an seiner oberen Seite geeignete Führungsösen für die Durchführung des gespannten Seils aufweist. Diese Führungsösen können so ausgestaltet sein, daß das Seil in einem nicht gespanntem Zustand in die Führungsösen eingehängt werden kann, ohne daß man Karabinerhaken oder dergleichen verwenden muß.

Des weiteren erkennt man beiderseits des Vakuumankers 6 je zwei Führungshülsen 9, die ihrerseits Ösen aufweisen, an denen der Karabinerhaken einer Sicherungsleine eingehängt werden kann. Das Wartungs- bzw. Reinigungspersonal befestigt jeweils eine Sicherungsleine an der Öse einer Führungshülse 9 und kann sich dann parallel zu dem Seil 2 in Längsrichtung der Tragfläche bewegen, wobei die Führungshülse entlang des Seiles mitgleitet. Sofern die Führungshülse und die Ösen am Vakuumanker so gestaltet sind, daß die Führungshülsen nicht in dauerhaftem Eingriff mit dem Seil 2 über den Vakuumanker hinwegbewegt werden können, muß die betreffende Person nach Erreichen des Vakuumankers die Sicherungsleine von der Führungshülse lösen und mit einer anderen Sicherungshülse jenseits des Vakuumankers wieder verbinden, um auch den anderen Teil der Tragfläche zu erreichen. Aufgrund der Verwendung des Vakuumankers kann es im Übrigen geschehen, das der Verlauf des Seiles zwischen den Anschlagpunkten 3 und 5 nicht gradlinig ist, sondern im Bereich des Vakuumankers leicht abknickt, was aber an der grundsätzlichen Funktion der Erfindung nichts ändert.

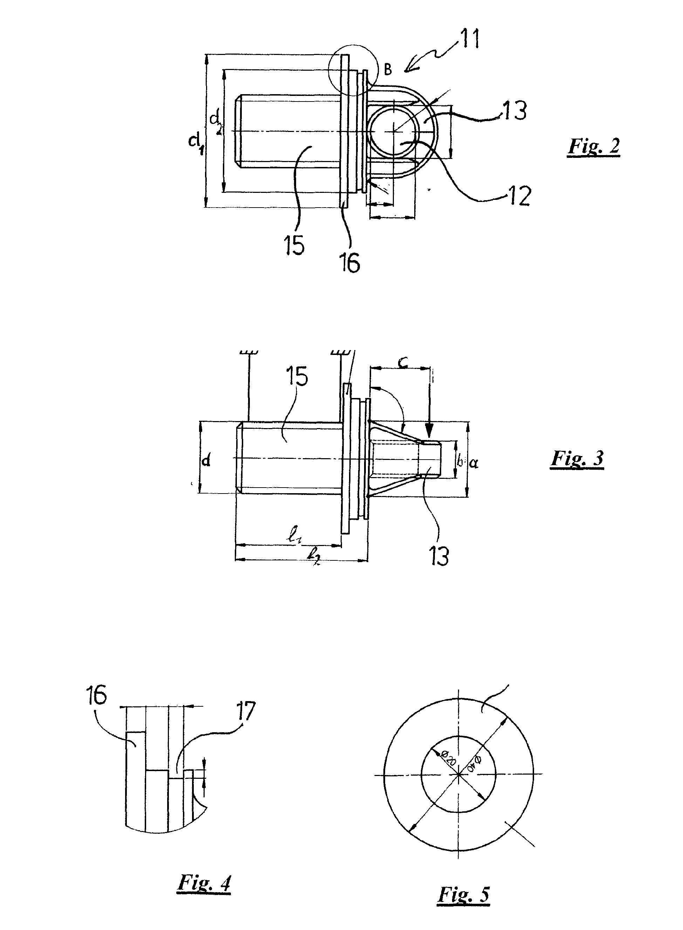

Details der Anschlagpunkte, bzw. der entsprechenden Befestigungsbolzen sind in den Figuren 2-7 zu erkennen.

Figur 2 zeigt eine Seitenansicht eines Gewindebolzens 11 mit einem Gewindeabschnitt 15, der einen Nenndurchmesser von einem dreiviertel Zoll aufweist. Dieser Gewindebolzen weist bereits integrierte Unterlegscheiben 16 und eine Seilöse 12 an seinem Kopfende auf. Die Seilöse 12 wird durch einen mehr oder weniger U-förmigen Bügel 13 mit nahezu rechteckigem Querschnitt gebildet, der mit einer Kopfplatte des Gewindebolzens einstückig verbunden ist und eine kreisförmige Öffnung mit einem ausreichend großen Radius definiert, um ein Sicherungsseil 2, eine Seilöse oder ein anderes Halteelement am Ende des Seiles hindurchführen zu können. Im vorliegenden Fall beträgt der lichte Durchmesser der Seilöse etwa 12mm.

Figur 3 zeigt denselben Sicherungsbolzen 11 jedoch in einer um seine Achse um 90° gedrehten Position, so daß in dieser Position der die Öse bildende, U-förmige Bügel 13 (teilweise verdeckt und gestrichelt) nur als Rechteck von seiner Außenseite her erkennbar ist. Zwischen dem Gewindeabschnitt 15 des Bolzens 11 und dem Bügel 13 am Kopf des Bolzens erkennt man auch die bereits erwähnte, integrierte Unterlegscheibe 16 und (besser erkennbar in dem Teilbild des Ausschnittes B in Figur 2 gemäß Figur 4) eine umlaufende Nut, die zur Aufnahme einer großflächigen Unterlegplatte dient.

Figur 5 zeigt eine weitere Unterlegscheibe aus einem elastomeren Material, deren Durchmesser in etwa mit dem der integrierten Unterlegscheibe 16 übereinstimmt und deren Innendurchmesser so bemessen ist, daß sie über den Gewindeabschnitt 15 hinwegbewegt werden kann. Wenn der Bolzen 11 an dem jeweiligen Anschlagpunkt 3 am Rumpf 4 bzw. dem Anschlagpunkt 5 einer Tragfläche festgeschraubt wird, liegt die Unterlegscheibe 18 gemäß Figur 5 zwischen der integrierten Unterlegscheibe 16 und der Oberfläche des Rumpfes bzw. der Tragfläche und schützt diese damit vor etwaigen Beschädigungen.

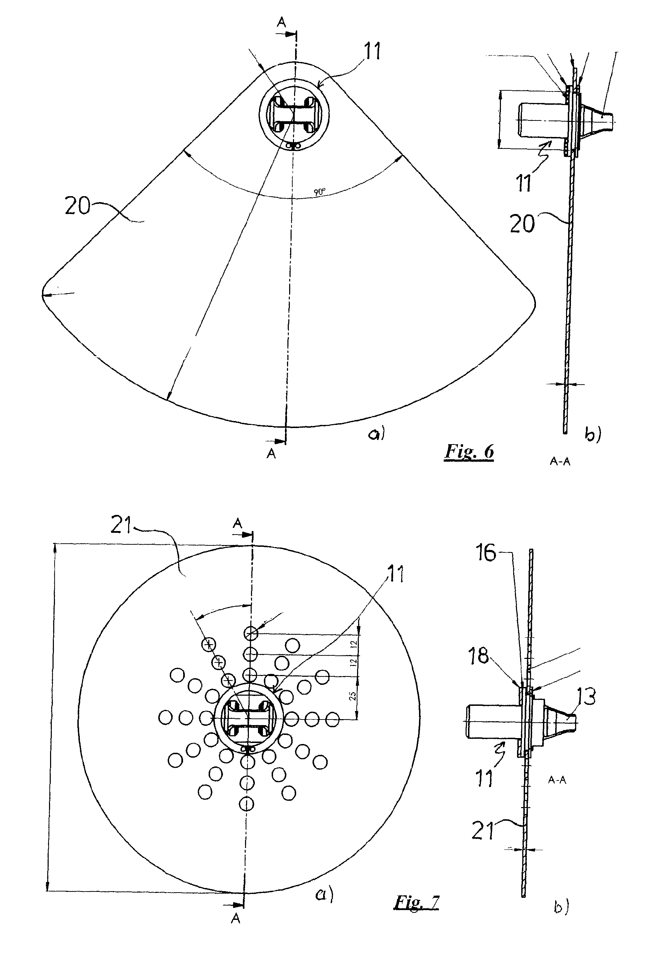

Figur 6a zeigt den Bolzen 11 in einer Draufsicht auf den Kopf zusammen mit einer darunter angeordneten, kreissektorförmigen Unterlegplatte 20 die einen 90° Sektor eines Kreises mit einem Radius von ca. 200mm umfaßt. Die wieder die Achse des Bolzens enthaltende Schnittansicht gemäß Figur 6b zeigt die Anordnung der Unterlegplatte 20 in einer umlaufenden Nut 18 am Kopf des Sicherungsbolzens 11 unterhalb der äußeren Befestigungsöse 12 aber noch oberhalb der integrierten Unterlegscheibe 16, die, abgesehen von der noch darunter liegenden elastomeren Unterlegscheibe 18, mit dem Rumpf bzw. der Tragfläche in Eingriff tritt.

Die Fläche der kreissektorförmigen, großflächigen Unterlegplatte beträgt ca. 300cm².

Figur 7a zeigt nochmals die Draufsicht auf einen Bolzen mit einer anderen großflächigen Unterlegplatte 21, die in diesem Fall kreisförmig ist und einen Durchmesser von ca. 200mm hat. Im Zentrum dieser Unterlegplatte 21 und um den Kopf des Bolzens 11 herum sind noch eine Reihe von strahlenförmig angeordneten kreisförmigen Durchbrüchen zu erkennen. Die Schnittansicht gemäß Figur 7b zeigt die Unterlegplatte 21 in der gleichen Nut 17 eines Gewindebolzens 11 wie auch im Fall der kreissektorförmigen Unterlegplatte gemäß Figur 6b.

Da aufgrund der Anordnung der Nut 17 der zwischen dieser Nut und dem Gewindeabschnitt 15 noch verbleibenden Teil des Kopfes, nämlich insbesondere die integrierte Unterlegscheibe 16 und die elastomere Unterlegscheibe 18 angeordnet sind, verbleibt noch ein gewisser Abstand zur Oberfläche von Tragfläche bzw. Rumpf, so daß auch die großflächigen Unterlegplatten 20 und 21 jeweils im Abstand von Rumpf bzw. Tragfläche angeordnet sind, wobei die kreisförmige Unterlegplatte 21 am Anschlagpunkt 5 der Tragfläche angebracht wird, während die kreissektorförmige Unterlegplatte 20 am Anschlagpunkt 3 des Rumpfes 4 des Flugzeuges angebracht wird.

Diese großflächigen Unterlegplatten dienen in erster Linie als Schutz der Oberfläche von Tragfläche und Rumpf in der Umgebung der Anschlagpunkte, zum Beispiel beim Anbringen der Bolzen, beim Einhängen eines Karabinerhakens oder beim Hantieren mit Werkzeugen an dem Anschlagpunkt. Gleichzeitig dienen diese Unterlegplatten aber auch als Warnhinweis für die Tatsache, daß die Sicherungsbolzen noch in die entsprechenden Gewindehülsen an den Anschlagpunkten angeschraubt sind, auch wenn beispielsweise das Seil und ein etwaiger Vakuumanker von der Tragfläche entfernt wurden.

Das Sicherungsseil selbst ist vorzugsweise so aufgebaut, daß es einen Zugkräfte aufnehmenden Seilkern und einen den Kern schützenden Seilmantel aufweist, der das Seil gegen Abrieb, Verschmutzung und Bestrahlung schützt und gleichzeitig auch eine weiche und glatte Oberfläche mit einer guten Haptik bietet. Das Seil hat vorzugsweise nur eine elastische Dehnung und insbesondere im vorgespannten Zustand eine maximale Lastdehnung von 1,5 % pro kN, vorzugsweise etwa 1 % pro kN. Geht man von den oben erwähnten bevorzugten Werten für Vorspannung und Lastgrenzwert der Dämpfungseinrichtung aus, so kann die Kraft von der Vorspannung (0,5 kN) bis zu einem Grenzwert von z. B. 4 kN Zugspannung in dem Seil ansteigen, so daß demzufolge bei Einhalten der vorstehend erwähnten Lastdehnung das Seil sich höchstens um 4 % dehnt was einer Längenänderung von 1,2 m entspricht. Wird ein zusätzlicher Vakuumanker vorgesehen, der in der Mitte zwischen den Anschlagpunkten angeordnet ist, so wird das Seil nur zwischen dem Vakuumanker und einem Anschlagpunkt ausgelenkt, wo es über eine Strecke von etwa 15 m frei gespannt ist. Die Längenänderung wird allein in diesem Abschnitt in eine seitliche Auslenkung umgesetzt. Dies ergibt eine maximale seitliche Auslenkung in der Mitte zwischen Anker und Anschlagpunkt von 3,05 m bei einem Auslenkungswinkel (gegenüber der geraden Seilerstreckung) von ca. 22,2°. Die auf eine abstürzende Person wirkende Lastspitze würde dann etwa 3 kN betragen, entsprechend etwa dem 3-fachen Körpergeweicht, wenn die Person einschließlich Ausrüstung etwa 100 Kg Gewicht hätte. Es versteht sich, daß leichtere Personen entsprechend früher abgebremst werden und die Auslenkung dann auch geringer ausfällt.

Die Bruchlast des Seiles sollte in der bevorzugten Ausführungsform der Erfindung oberhalb von 6 kN, insbesondere oberhalb von 8 oder 10 kN liegen.

Da das Seil bei Abstürzen nur als primäre Verankerung einer PSA dient und bei Abstürzen in der Regel senkrecht zur Seilerstreckung ausgelenkt wird, kommt es im Gegensatz zu üblichen Sicherungsleinen nicht so sehr darauf an, daß das Seil eine große Lastdehnung aufweist, da die Dehnung des Seiles durch die seitliche Auslenkung in eine in etwa zum Kehrwert des Sinus des Auslenkungswinkels proportionale Wegstrecke übersetzt wird, die der Absturztiefe entspricht. Auf die abstürzende Person wirkende Lastspitzen werden also schon durch die Geometrie der Anordnung erheblich gedämpft.

Die bevorzugten Seile haben im allgemeinen einen Seilmantel aus parallelen, im wesentlichen in Längsrichtung des Seiles verlaufenden Litzen oder Fasern, im Gegensatz zu gedrehten oder geflochtenen Seilkernen, die bei Belastung eine wesentlich größere Dehnung aufweisen können.

Die Vorspannung sorgt außerdem dafür, daß die im allgemeinen größere Anfangsdehnung eines solchen Seiles bereits kompensiert ist, wenn das Seil zwischen den Anschlagendpunkten gespannt und durch die Spannvorrichtung vorgespannt ist.

## Patentansprüche

1. Vorrichtung zur Sicherung von Personen bei Wartungsarbeiten auf Flugzeugtragflächen mit einem oberhalb der Tragfläche (1) gespannten Seil (2), **dadurch gekennzeichnet, dass** das Seil (2) zwischen einem definierten ersten Anschlagpunkt (3) am Rumpf (4) oberhalb der Tragfläche (1) und einem zweiten definierten Anschlagpunkt (5) an der Oberseite der Tragfläche (1) in der Nähe der Tragflächenspitze gespannt ist, wobei zwischen den ersten und zweiten Anschlagpunkten (3,5) eine Dämpfungseinrichtung (7) vorgesehen ist. welche bei in dem Seil auftretenden Zugkräften eine definierte Seilverlängerung bewirkt.

2. Vorrichtung nach Anspruch 1, **dadurch gekennzeichnet, dass** die Dämpfungseinrichtung (7) ein von den auftretenden Werten der Zugkraft abhängiges Maß an effektiver Seilverlängerung bewirkt..

3. Vorrichtung nach Anspruch 1 oder 2, **dadurch gekennzeichnet, dass** die Dämpfungseinrichtung dafür ausgelegt ist, bei Auftreten eines oberen Grenzwertes der Zugspannung in dem Seil (2), welcher höchstens 6 kN beträgt, ein begrenztes Maß an zusätzlicher Seillänge freizugeben.

4. Vorrichtung nach Anspruch 1 oder 2, **dadurch gekennzeichnet, dass** die Dämpfungseinrichtung in Form eines Sicherungsseiles mit einer definierten Lastdehnung vorgesehen ist.

5. Vorrichtung nach Anspruch 1 bis 4, **dadurch gekennzeichnet, dass** das Seil eine Lastdehnung zwischen 0,5 % und 2% pro kN (kiloNewton) aufweist.

6. Vorrichtung nach einem der Ansprüche 1 bis 5, **dadurch gekennzeichnet, dass** die Dämpfungseinrichtung (7) derart ausgelegt ist, dass sie die Seilfreigabe stoppt, sobald die Zugspannung in dem Seil (2) einen unteren Grenzwert unterschreitet.

7. Vorrichtung nach einem der Ansprüche 1 bis 7 **dadurch gekennzeichnet, dass** zwischen den Anschlagsendpunkten (3,5), eine Seilspannvorrichtung vorgesehen ist, welche in dem Seil (2) eine vorgebbare Seilvorspannung einstellt.

8. Vorrichtung nach einem der Ansprüche 1 bis 7, **dadurch gekennzeichnet, dass** in einem mittleren Bereich zwischen den Anschlagpunkten (3,5) ein zusätzlicher, das gespannte Seil (2) gegen lokale seitliche Auflenkungen sichernder Vakuumanker (6) zur Anbringung auf der Tragfläche vorgesehen ist.

9. Vorrichtung nach einem der Ansprüche 1 bis 8, **dadurch gekennzeichnet, dass** an den Anschlagendpunkten (3,5) je ein ¾ Zoll-Gewinde vorgesehen ist und dass die Anschlagsendpunkte je einen hierzu passenden Gewindebolzen (11) mit einer Seilöse (12 ) aufweisen.

10. Vorrichtung nach einem der Ansprüche 1 bis 9, **dadurch gekennzeichnet, dass** mindestens eine das Seil umgreifende Führungshülse (9) für die Verbindung einer Sicherungsleine mit dem Seil (2) vorgesehen ist.

11. Vorrichtung nach Anspruch 10, **dadurch gekennzeichnet, dass** die mindestens eine Führungshülse (9) eine Sicherheitsklemmvorrichtung aufweist, welche bei plötzlichen Längsverschiebungen der Führungshülsen (9) entlang des Seils (2) die Führungshülsen (9) an dem Seil (2) verklemmt.

12. Vorrichtung nach einem der Ansprüche 1 bis 11, **dadurch gekennzeichnet, daß** das Seil (2) im vorgespannten Zustand eine maximale Lastdehnung von 2 % pro kN, vorzugsweise von weniger als 1,5% pro kN und insbesondere etwa 1 % pro kN hat.

13. Vorrichtung nach einem der Ansprüche 1 bis 12, **dadurch gekennzeichnet, daß** das Seil für eine dynamische Lastaufnahme von mindestens 10 kN ausgelegt ist.

14. Vorrichtung nach einem der Ansprüche 1 bis 13, **dadurch gekennzeichnet, daß** das Seil aus einem Seilkern und einem Seilmantel besteht, wobei der Seilkern aus zur Längsrichtung des Seiles im wesentlichen parallelen Fasern oder Litzen aufgebaut ist, während der Seilmantel aus einem geflochtenem Material, vorzugsweise aus Polypropylen, besteht.

15. Vorrichtung nach Anspruch 14, **dadurch gekennzeichnet, daß** das Seil einen Durchmesser von 14 bis 18 mm, vorzugsweise 16 mm Durchmesser hat.
